# EUROPÄISCHE PATENTSCHRIFT

(11) **EP 1 633 604 B1**
(45) Veröffentlichungstag und Bekanntmachung des Hinweises auf die Patenterteilung: **03.01.2007**
(21) Anmeldenummer: 03767431.4
(22) Anmeldetag: 18.11.2003
(51) Int. Cl.: B60R 21/01

(54) **VORRICHTUNG ZUR ANSTEUERUNG VON RÜCKHALTEMITTELN**
DEVICE FOR TRIGGERING RESTRAINT MEANS
DISPOSITIF POUR DECLENCHER DES MOYENS DE RETENUE

(30) Priorität: 30.04.2003 DE 10319443
(43) Veröffentlichungstag der Anmeldung: 15.03.2006
(73) Patentinhaber: ROBERT BOSCH GMBH, 70442 Stuttgart (DE)
(72) Erfinder: THEISEN, Marc, 74354 Besigheim (DE)
(86) Internationale Anmeldenummer: PCT/DE2003/003818
(87) Internationale Veröffentlichungsnummer: WO 2004/096612

(56) Entgegenhaltungen:
- US-A- 5 825 284
- US-A1- 2003 141 965
- US-B1- 6 452 487
- PATENT ABSTRACTS OF JAPAN vol. 2003, no. 04, 2. April 2003 (2003-04-02) -& JP 2002 352373 A (ISUZU MOTORS LTD), 6. Dezember 2002 (2002-12-06)

## Beschreibung

### Stand der Technik

Die Erfindung geht aus von einer Vorrichtung zur Ansteuerung von Rückhaltemitteln in einem Fahrzeug nach der Gattung des unabhängigen Patentanspruchs.

Aus DE 697 07 148 T2 ist es bekannt, das Lastverlagerungsverhältnis und die Höhe des Schwerpunkts bei einem Fahrzeuganhängersystem zu berechnen, um damit dem Fahrzeugführer mit einer Anzeige die Wahrscheinlichkeit eines Überrollens des Fahrzeugs darzustellen. Der Fahrzeugführer kann dann diese Information nutzen, um das Fahrzeug sicherer zu betreiben und so das Vorkommen von Überrollunfällen zu reduzieren. Die US-A-5825284, als nächstliegender Stand der Technik angesehen, zeigt eine Vorrichtung zur Anzeige einer Wahrscheinlichheit eines Überrollens des Fahrzeugs, wobei wenigstens ein Signal des Anhängers berüchsichtigt wird.

Nachteilig daran ist, dass die Wahrscheinlichkeit des Überrollens lediglich angezeigt wird, aber nicht automatisch weiterverarbeitet und anderen Systemen im Fahrzeug zur Verfügung gestellt wird.

Aufgabe der Erfindung ist es, die Vorrichtung derart weiterzubilden, dass ein Signal vom Anhänger automatisch in einem Sicherheitssystem weiterverarbeitet wird.

### Vorteile der Erfindung

Die erfindungsgemäße Vorrichtung zur Ansteuerung von Rückhaltemitteln in einem Fahrzeug mit einem Anhänger und den Merkmalen des unabhängigen Patentanspruchs hat den Vorteil, dass nunmehr Informationen über den Anhänger in die

Auslöseentscheidung von Rückhaltemitteln integriert werden. Dadurch kann die erhöhte Gesamtmasse des Gespanns bei einem Crash bzw. das erhöhte Risiko bezüglich eines Überschlagsunfalls mit bei der Auslöseentscheidung der Rückhaltemittel bzw. des Überrollbügels berücksichtigt werden. Dadurch ist ein verbesserter Insassenschutz möglich.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Rückhaltemitteln in einem Fahrzeug mit einem Anhänger möglich.

Besonders vorteilhaft ist, dass das Signal, das nunmehr den Anhänger im Auslösealgorithmus für Rückhaltemittel berücksichtigt, lediglich das Vorhandensein des Anhängers anzeigt. Damit kann dann der Auslösealgorithmus über eine Worst-Case-Betrachtung den Einfluss des Anhängers beispielsweise berücksichtigen. Das Vorhandensein des Anhängers kann beispielsweise über eine Schaltung, die mit einer elektrischen Anhängerkupplung koppelbar ist, erzeugt werden. Fahrzeuge mit einer Anhängerkupplung verfügen über ein Blinklicht im Sichtbereich des Fahrers, welches bei Betätigung des Blinkers nur einmal blinkt, wenn keine elektrische Last an der elektrischen Kupplung für den Anhänger hängt und welches während der gesamten Betätigung des Blinkers blinkt, wenn eine elektrische Last daran hängt. Eine sehr einfache Variante besteht nun darin, dieses Signal zu nutzen, um auf eine erhöhte Fahrzeuglast zu schließen. Da das Signal jedoch sowohl einen beleuchteten Anhänger als auch einen beleuchteten Fahrradgepäckträger anzeigen kann, ist zur Schaffung einer Eindeutigkeit eine Zusatzinformation notwendig. Diese Zusatzinformation wird vom Anhänger an das Zugfahrzeug übertragen. Dazu kann beispielsweise ein elektrischer Stecker oder eine andere Kommunikationsverbindung zwischen Fahrzeug und Anhänger verwendet werden. Dieses Signal kann auch nur das Vorhandensein des Anhängers oder weitere speziellere Angaben über das Gewicht und den Fahrzustand umfassen. Angaben über das Gewicht und den Fahrzustand können beispielsweise das Eigengewicht als minimales Gewicht, das Gesamtgewicht, die Lastverteilung bzw. Informationen über Pendelbewegungen beinhalten. Das Gesamtgewicht und die Lastverteilung kann über Druck- bzw. Gewichtssensoren an der einen oder den beiden oder mehreren Achsen des Anhängers bzw. über einen Drucksensor zwischen Kupplungskopf des Zugfahrzeugs und dem Kupplungsmaul des Anhängers ermittelt werden. Die Pendelbewegungen können beispielsweise über Reibungssensoren zwischen dem Kupplungskopf des Zugfahrzeugs und den Reibeelementen im Kupplungsmaul des Anhängers ermittelt werden. Diese vom Anhänger zur Verfügung gestellten Informationen können über die elektrische Kupplung an das Zugfahrzeug übertragen werden und dem Steuergerät der Rückhaltemittel, wie beispielsweise Airbags oder Gurtstraffern, dem Steuergerät des Überrollbügels und weiteren Systemen zur Erhöhung der Sicherheit des Insassen, wie beispielsweise dem Steuergerät des Sitzes oder der reversiblen Gurtstraffern, zur Verfügung gestellt werden. Bei verstärkten Pendelbewegungen des Anhängers ist es mit diesen Informationen beispielsweise möglich, die Auslöseentscheidung des Überrollbügels zu sensibilisieren oder den reversiblen Gurtstraffer zu betätigen, um den Fahrer und Beifahrer in eine optimale Sitzposition zu bringen und um den Fahrer vor der erhöhten Gefahr zu warnen. Es handelt sich demnach hier um eine haptische Warnung. Weiterhin kann die erhöhte Masse und die damit verringerte Bremswirkung des Zugfahrzeugs mit bei der Auslöseentscheidung der Rückhalte- und Sicherheitssysteme berücksichtigt werden. Außerdem kann die Kenntnis über die erhöhte Masse zur verbesserten Prädiktion der Aufprallgeschwindigkeit über Precrash-Signale benutzt werden. Alle diese Informationen werden als Eingangsdaten in das Steuergerät der Rückhalte- und Sicherheitssysteme benutzt. Dieses Steuergerät besitzt wenigstens einen Prozessor, auf dem ein Algorithmus abläuft, der die Auslöse- bzw. Aktivierungsentscheidung der Rückhalte- bzw. Sicherheitssysteme trifft. Innerhalb dieses Gesamtsystems werden also vom Anhänger Zusatzinformationen dem Steuergerät im Zugfahrzeug zur Verfügung gestellt, um eine sensiblere, präzisere und robustere Auslöseentscheidung der Sicherheits- und Rückhaltesysteme zu ermöglichen und den Fahrer vor der erhöhten Schleudergefahr zu warnen.

### Zeichnungen

Ausführungsbeispiele der Erfindung sind in der Zeichnung dargestellt und werden in der nachfolgenden Beschreibung näher erläutert.

Es zeigen Figur 1 ein Blockschaltbild der erfindungsgemäßen Vorrichtung, Figur 2 eine Sensorik für die Pendelbewegung und Figur 3 ein weiteres Blockschaltbild der erfindungsgemäßen Vorrichtung.

### Beschreibung

Bei aktuellen Systemen basiert die Auslöseentscheidung der Rückhaltemittel in einem Fahrzeug wie beispielsweise den Airbags oder den Gurtstraffern auf Informationen von Beschleunigungssensoren oder Precrash-Sensoren.

Erfindungsgemäß wird nun vorgeschlagen, die Anhängerlast direkt in die Auslöseentscheidung zu integrieren, wodurch sich eine präzisere und genauere Auslösung der Rückhaltemittel und des Überrollbügels ergibt. Durch die Anhängerlast ergibt sich eine geringere maximale Verzögerung des Gespanns, sodass die Information über eine Anhängerlast als Korrekturwert bei der Prädiktion der Aufprallgeschwindigkeit während der Evaluierung der Precrash-Signale benutzt werden kann. Desweiteren kann die erhöhte Masse bei der Evaluierung der Beschleunigungssignale, die beispielsweise von den Upfrontsensoren oder dem zentralen Beschleunigungssensor gemessen werden, benutzt werden. Außerdem gerät ein Fahrzeug-Anhänger-Gespann leichter ins Schleudern und ist daher bezüglich eines Überrollunfalls stärker gefährdet. Da sollte insbesondere die Information über einen Anhänger bei der Detektion eines Überrollvorgangs mit berücksichtigt werden.

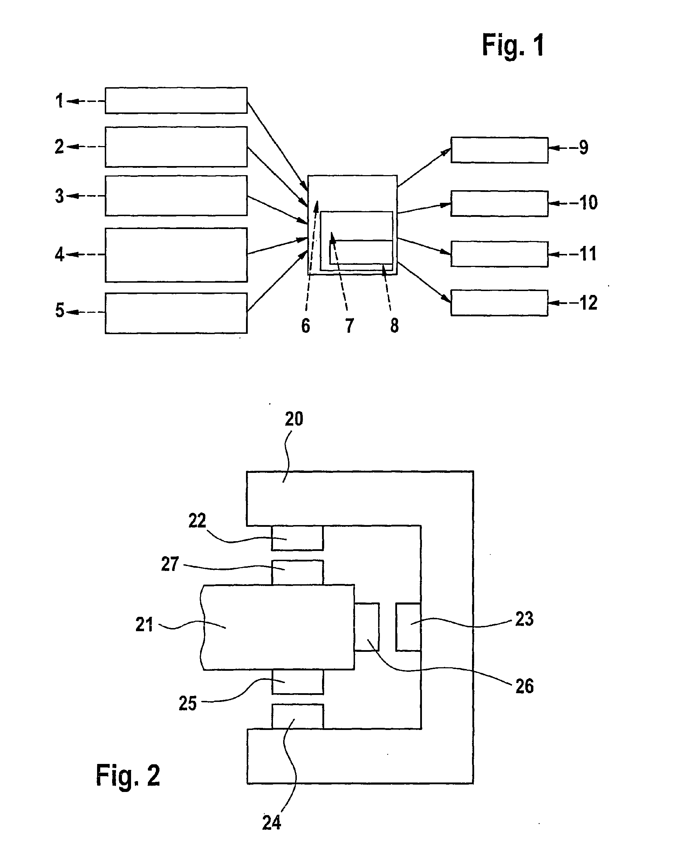

Figur 1 zeigt in einem Blockschaltbild die erfindungsgemäße Vorrichtung zur Ansteuerung von Rückhaltemitteln in einem Fahrzeug mit einem Anhänger. Ein Rückhaltemittelsteuergerät 6 weist einen Prozessor 7 auf, auf dem ein Algorithmus 8 gerechnet wird. Dieser Algorithmus 8 dient zur Ansteuerung von Rückhaltemitteln 9-12 und verwendet zur Ansteuerung der Rückhaltemittel 9-12 Sensorsignale. Diese Sensorsignale werden dem Steuergerät 6 zugeführt. Es ist allerdings so, dass auch das Steuergerät 6 selbst eigene Beschleunigungssensoren und gegebenenfalls Drehratensensoren zur Plausibilisierung und Erkennung von Crash-Vorgängen bzw. Überrollvorgängen aufweist. Über einen ersten Dateneingang erhält das Steuergerät 6 eine Blinkerinformation 1 von einer elektronischen Schaltung, die anzeigt, ob ein Anhänger vorhanden ist oder nicht. Über einen zweiten Dateneingang erhält das Steuergerät 6 von einem Sensor Informationen über die Fahrdynamik des Anhängers. Dies kann beispielsweise ein Sensor 2 für Schleuderbewegungen durch den Anhänger sein. Dieser Sensor kann insbesondere ein Reibungssensor sein, der an der Kupplung angebracht ist, um die Schleuderbewegungen des Anhängers zu erfassen. Über einen dritten Dateneingang erhält das Steuergerät 6 Informationen über das Eigengewicht des Anhängers von einem Gewichtssensor 3 oder einem Speicher, der am Anhänger angeordnet ist. Über einen vierten Dateneingang erhält das Steuergerät 6 Informationen über die Last auf den Achsen bzw. der Kupplung des Anhängers. Auch dies kann bei der Ansteuerung von Rückhaltemitteln berücksichtigt werden, da die Lastverteilung auf einen Überrollvorgang und die Fahrdynamik des Zugfahrzeugs Einfluss nimmt. Über einen fünften Dateneingang ist das Steuergerät 6 mit einer Precrash-Sensorik 5 verbunden, um Umgebungsinformationen zu erhalten. Dies ist insbesondere bei der Ansteuerung von Rückhaltemitteln wichtig. In Abhängigkeit von diesen Sensorsignalen steuert dann der Prozessor 7 Rückhaltemittel wie Airbags 9, Gurtstraffer 10, eine Sitzeinstellung 11 oder einen Überrollbügel 12 an.

Figur 2 zeigt eine Sensorik zur Erfassung der Pendelbewegungen des Anhängers. Ein Kupplungskopf 21 weist Reibungssensoren 25, 26 und 27 auf, während ein Kupplungsmaul 20, das dem Anhänger zugeordnet ist, Reibeelemente aufweist, die hier mit dem Bezugszeichen 22, 23 und 24 bezeichnet sind. Die Reibeelemente 22, 23 und 24 sollen Pendelbewegungen des Anhängers entgegenwirken.

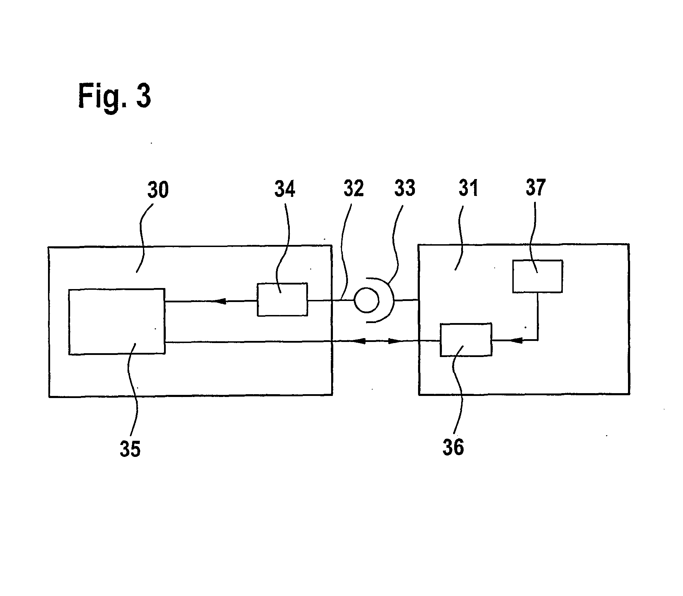

Figur 3 zeigt in einem weiteren Blockschaltbild die erfindungsgemäße Vorrichtung. In einem Fahrzeug 30 befindet sich ein Airbagsteuergerät 35, an dessen Dateneingang eine Schaltung 34 angeschlossen ist. Über einen Datenein-/-ausgang ist das Steuergerät 35 über eine Datenverbindung mit einem Anhänger 31 und dabei mit einer Schnittstelle 36 verbunden. Dies ermöglicht den Datenaustausch zwischen dem Anhänger und dem Fahrzeug 30. Dabei können Informationen von Sensoren im Anhänger 31 wie die Gewichtssensoren zur Erfassung der Lastverteilung oder einem Speicher 37, in dem Daten wie das Eigengewicht des Anhängers 31 abgelegt sind, zum Steuergerät 35 übertragen werden, sodass das Steuergerät 35 diese Sensordaten bei der Berechnung des Auslösealgorithmus für Rückhaltemittel berücksichtigt. Von der Schaltung 34 erhält das Steuergerät 35 die Information, ob der Anhänger 31 an das Fahrzeug 30 über den Kupplungskopf 32 und das Kupplungsmaul 33 angekoppelt ist. Weitere Sensoren können im Anhänger 31 angeordnet sein und Informationen an das Steuergerät 35 zur Berücksichtigung im Auslösealgorithmus liefern.

## Patentansprüche

1. Vorrichtung zur Ansteuerung von Rückhaltemitteln in einem Fahrzeug (30) mit einem Anhänger (31), wobei die Vorrichtung wenigstens ein Signal des Anhängers (31) bei der Ansteuerung der Rückhaltemittel (9 bis 12) berücksichtigt.

2. Vorrichtung nach Anspruch 1, **dadurch gekennzeichnet, dass** das wenigstens eine Signal das Vorhandensein des Anhängers (31) anzeigt.

3. Vorrichtung nach Anspruch 2, **dadurch gekennzeichnet, dass** das wenigstens eine Signal durch eine Schaltung (34), die mit einer elektrischen Anhängerkupplung (32, 33) gekoppelt ist, erzeugt wird.

4. Vorrichtung nach Anspruch 1, **dadurch gekennzeichnet, dass** das wenigstens eine Signal das Gewicht des Anhängers (31) angibt.

5. Vorrichtung nach Anspruch 1, **dadurch gekennzeichnet, dass** das wenigstens eine Signal eine Lastverteilung des Anhängers (31) angibt.

6. Vorrichtung nach Anspruch 1, **dadurch gekennzeichnet, dass** das wenigstens eine Signal eine Bewegung des Anhängers (31) angibt.

7. Vorrichtung nach einem der vorhergehenden Ansprüche, **dadurch gekennzeichnet, dass** das wenigstens eine Signal über eine Signalübertragung vom Anhänger (31) zum Fahrzeug (30) übertragen wird.

8. Vorrichtung nach Anspruch 5, **dadurch gekennzeichnet, dass** das wenigstens eine Signal mittels einer Gewichtssensorik im Anhänger (31) erzeugt wird.

9. Vorrichtung nach Anspruch 6, **dadurch gekennzeichnet, dass** zur Erzeugung des wenigstens einen Signals eine Fahrdynamiksensorik im Anhänger oder eine Reibungssensorik (25 bis 27) am Kupplungskopf (21) vorgesehen ist, die mittels Reibeelementen (22 bis 24) am Kupplungsmaul (20) die Bewegung erfasst.

## Claims

1. Device for activating restraint means in a vehicle (30) having a trailer (31), the device taking account of at least one signal from the trailer (31) when activating the restraint means (9 to 12).

2. Device according to Claim 1, **characterized in that** the at least one signal indicates the presence of the trailer (31).

3. Device according to Claim 2, **characterized in that** the at least one signal is generated by a circuit (34) which is coupled to an electrical trailer coupling (32, 33).

4. Device according to Claim 1, **characterized in that** the at least one signal indicates the weight of the trailer (31).

5. Device according to Claim 1, **characterized in that** the at least one signal indicates a load distribution of the trailer (31).

6. Device according to Claim 1, **characterized in that** the at least one signal indicates a movement of the trailer (31).

7. Device according to one of the preceding claims, **characterized in that** the at least one signal is transmitted via a signal transmission from the trailer (31) to the vehicle (30).

8. Device according to Claim 5, **characterized in that** the at least one signal is generated by means of a weight sensor system in the trailer (31).

9. Device according to Claim 6, **characterized in that** the generation of the at least one signal is achieved by providing a driving dynamics sensor system in the trailer or a friction sensor system (25 to 27) on the coupling head (21), this sensor system using friction elements (22 to 24) on the coupling jaw (20) to detect the movement.

## Revendications

1. Dispositif pour déclencher des moyens de retenue dans un véhicule (30) tirant une remorque (31), le dispositif tenant compte d'au moins un signal de la remorque (31) lors du déclenchement des moyens de retenue (9 à 12).

2. Dispositif selon la revendication 1,
**caractérisé en ce qu'**
au moins un signal indique la présence de la remorque (31).

3. Dispositif selon la revendication 2,
**caractérisé en ce qu'**
au moins un signal est produit par un circuit (34) couplé avec un attelage électrique (32, 33) de la remorque.

4. Dispositif selon la revendication 1,
**caractérisé en ce qu'**
au moins un signal indique le poids de la remorque (31).

5. Dispositif selon la revendication 1,
**caractérisé en ce qu'**
au moins un signal indique une répartition de la charge de la remorque (31).

6. Dispositif selon la revendication 1,
**caractérisé en ce qu'**
au moins un signal indique un mouvement de la remorque (31).

7. Dispositif selon l'une des revendications précédentes, **caractérisé en ce qu'**
au moins un signal est transmis au véhicule (30) par une transmission de signal à partir de la remorque (31).

8. Dispositif selon la revendication 5,
**caractérisé en ce qu'**
au moins un signal est produit par un moyen de détection de poids dans la remorque (31).

9. Dispositif selon la revendication 6,
**caractérisé en ce que**
pour la production d'au moins un signal, un capteur de la dynamique de marche de la remorque ou un capteur de friction (25 à 27) à la tête d'attelage (21) détecte le mouvement par des d'éléments de friction (22 à 24) à la fourche d'attelage (20).
